# EUROPÄISCHE PATENTSCHRIFT

(11) **EP 0 387 241 B1**
(45) Veröffentlichungstag und Bekanntmachung des Hinweises auf die Patenterteilung: **23.03.1994**
(21) Anmeldenummer: 90890063.2
(22) Anmeldetag: 07.03.1990
(51) Int. Cl.: B01F 3/04, C02F 3/08

(54) **Verfahren und Vorrichtung zur Begasung von Flüssigkeiten**
Process and device for introducing gas into liquids
Procédé et dispositif pour l'introduction de gaz dans des liquides

(30) Priorität: 08.03.1989 AT 513/89
(43) Veröffentlichungstag der Anmeldung: 12.09.1990
(73) Patentinhaber: Kühtreiber, Franz, Dipl.-Ing.Dr.Techn., A-2136 Laa an der Thaya (AT)
(72) Erfinder: Kühtreiber, Franz, Dipl.-Ing.Dr.Techn., A-2136 Laa an der Thaya (AT)
(74) Vertreter: Gibler, Ferdinand, Dipl.Ing. Dr. techn.

(56) Entgegenhaltungen:
- EP-A- 0 043 579
- EP-A- 0 131 236
- CA-A- 1 082 821
- US-A- 4 200 532
- PATENT ABSTRACTS OF JAPAN, Band 9, Nr. 108 (C-280)(1831), 11. Mai 1985; & JP-A-60890 Mai 1985; & JP-A-60890 (OOSAKAFU) 05.01.1985
- PATENT ABSTRACTS OF JAPAN, Band 4, Nr. 77 (C13)(559), 4. Juni 1980; & JP-A-5541845 (DENGIYOUSHIYA KIKAI SEISAKUSHO K.K.) 24.03.1980

## Beschreibung

Es sind zahlreiche Verfahren bekannt, Gase in Flüssigkeiten einzutragen, beispielsweise Luftsauerstoff bei aeroben Prozessen. Die Luft wird dabei in möglichst kleinen Blasen eingebracht, da mit Vergrößerung der Grenzfläche pro Volumeneinheit Luft auch die Sauerstoffausnützung steigt. Ebenso wichtig ist aber auch die laufende Grenzflächenerneuerung, um einer Verlangsamung des Sauerstoffdurchtrittes entgegen zu treten.

Der Energieaufwand beim Eintrag von komprimierter Luft ist beträchtlich.

Weiters ist auch die Methode bekannt, bei welcher die Flüssigkeit zu großer Oberfläche aufgelöst wird, beispielsweise in sogenannten Tropfkörpern, wie man sie in der Abwasseraufbereitung oder bei der Fesselgärung zur Herstellung von Gärungsessig findet. Bei dieser Methode ist allerdings die Pumparbeit sehr energieaufwendig. Weiters ist es auch noch nicht gelungen, derartige Tropfkörper so zu beschicken, daß die ganze zur Verfügung stehende Oberfläche gleichmäßig benetzt wird.

Beispielsweise zeigt die EP-A-131 236 eine mechanisch biologische Kläranlage zum Reinigen von Abwässern sowie Verfahren zum Klären von Abwässern, wobei in einem Klärbecken rotierende Tauchkörper angeordnet sind, welche aus je einem stirnseitig mitsammen verbundenen gelochten Innen- und Außenrohr besteht. Das Außen- und/oder Innenrohr sind mit Füllkörpern gefüllt, wobei an der Außenseite des Außenrohres Schaufeln zum Eintragen von Luftsauerstoff in das Abwasser angeordnet sind.

Es sind auch schon vorgeformte, blockförmige Elemente mit großer innerer Oberfläche bekannt. Derartige Elemente sind selbsttragend und können um die Welle eines vorbeschriebenen Hohlkörpers angeordnet werden und bedürfen dann keines umhüllenden Mantels im Sinne der beschriebenen Hohlkörper mehr.

Eine weitere interessante Variante sind die sogenannten Scheibentauchkörper. Dabei werden auf einer Welle in geringem Abstand Kreisscheiben aus einem geeigneten Material von bis zu 3 m Durchmesser angebracht. Diese tauchen etwa zur Hälfte in die Flüssigkeit ein und rotieren in dieser. Beispielsweise ist bei Verwendung dieser Scheibentauchkörper bei Abwässern binnen weniger Tage der Bewuchs mit den notwendigen Mikroorganismen auf den Scheiben vorhanden und die Anlage im Rahmen der konstruktionsbedingten Möglichkeiten betriebsfähig. Solche Anlagen sind mit minimalem Energieaufwand betreibbar, weisen allerfings noch eine Reihe von Nachteilen auf.
Beispielsweise zeigt die Japanische Anmeldung Nr. 58-107643 eine Vorrichtung mit Drehscheiben zu Wasserbehandlung, welche in ihrem Zentralbereich rund um die Achse mit kommunizierenden Öffnungen versehen sind, welche Öffnungen beiderseits von radialen Abstandshaltern begrenzt sind. Diese Abstandshalter zwischen den Drehscheiben haben die Funktion der Rippen im Laufrad einer Kreiselpumpe, wobei die Flüssigkeit von innen nach außen fließt und über die Öffnungen nachtransportiert wird. Damit soll eine intensivere Bespülung der auf den Scheiben haftenden Mikroorganismen bewirkt und eine Vakuumbildung verhindert werden.

Um eine zweckmäßige Begasung von Flüssigkeiten durchführen zu können, ist es wichtig, große innere Oberflächen zu schaffen. Derartige Konstruktionen werden in dem zu belüftenden Substrat, welches schon die nötigen Mikroorganismen enthält, etwa zur Hälfte eintauchend rotieren gelassen. In kurzer Zeit besiedeln bei Einsatz als Fermenter die Mikroorganismen die zur Verfügung stehende Oberfläche und fermentieren das vorhandene Substrat.

In eingetauchtem Zustand werden die Oberflächen und die Mikroorganismenkulturen intensiv benetzt und beim Auftauchen durch die große Oberfläche intensiv belüftet.

Die Erfindung betrifft eine Begasungsvorrichtung für Flüssigkeiten, die Scheibentauchkörper mit vollflächigen Scheiben ohne Löcher aufweist, wobei zwischen jeweils zwei benachbarten Scheiben mindestens eine, vorzugsweise vom Rand zur Mitte hin verlaufende, Dichtleiste angeordnet ist, wodurch das durchgehende Volumen zwischen jeweils zwei Scheiben unterbrochen wird.

Dadurch wird das nachteilige Herumschieben der jeweils zwischen zwei Tauchscheiben be findlichen Luft, was zu einer Sauerstoffverarmung führt, vermieden.

Die Erfindung betrifft auch ein Verfahren zur Begasung von Flüssigkeiten mit einer erfindungsgemäßen Vorrichtung, oder einer Vorrichtung, umfassend Scheibentauchkörper mit vollflächigen Scheiben ohne Löcher und ohne Dichtleiste zwischen jeweils zwei benachbarten Scheiben, indem ein Gaswechsel zwischen jeweils zwei benachbarten Scheiben durch Einblasen eines Gasstromes von außen zwischen die Scheiben der Vorrichtung erfolgt.

Eine weitere Einsatzmöglichkeit der erfindungsgemäßen Vorrichtung besteht in deren Verwendung zum Waschen von Gasen.

Dies geschieht, um entweder Gase zu reinigen, bspw. Rauchgase, oder um einige Komponenten eines Gasgemisches zu nützen, derart, daß man z.B. Abwässer mit zu hoher Alkalität neutralisiert, indem einer derartigen Vorrichtung statt Luft die Abgase einer Feuerung zugeführt werden.

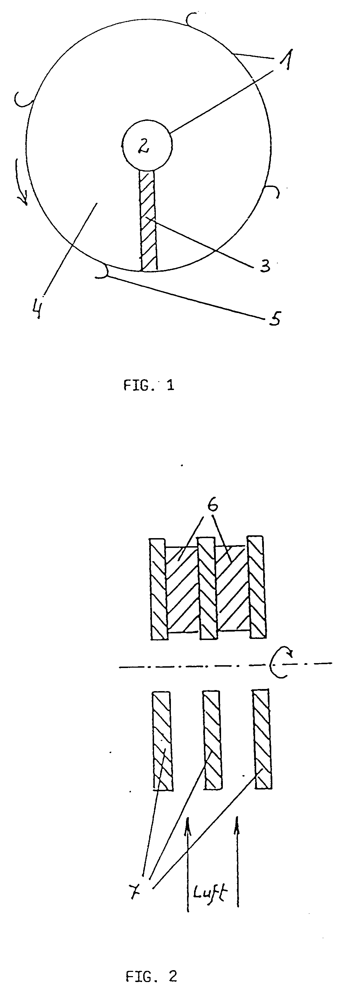

Die Erfindung wird im folgenden anhand eines Ausführungsbeispiels unter Zuhilfenahme der angeschlossenen Zeichnung näher beschrieben.
Es zeigt Fig. 1 einen Tauchkörper nach dem Stand der Technik im Querschnitt; und Fig.2 die erfindungsgemäße Vorrichtung im Querschnitt.

Der in Fig. 1 dargestellte Tauchkörper umfaßt einen inneren und einen äußeren gasdurchlässigen Mantel 1, der mit Füllkörpern 4, z.B. Raschigringen, befüllt ist, und einen sich um die Achse in Längsrichtung erstreckenden Hohlraum 2. Weiters umfaßt dieser Hohlkörper eine der Lange nach durchgehende Trennwand 3. Zusätzlich sind am äußeren Mantel Schöpfvorrichtungen 5 angeordnet.

Fig.2 zeigt die Ausbildung der Vorrichtung als Scheibentauchkörper, wobei jeweils zwischen zwei benachbarten Scheiben 7 eine vorzugsweise von außen nach innen durchgehende Dichtleiste 6 eingebaut ist. Anstelle dieser Dichtleisten oder gleichzeitig mit diesen kann auch ein Gas zwischen die Scheiben geblasen werden. Durch den Einbau dieser Dichtleisten 6 wird z.B. Luft während des Betriebes nicht im Kreis herumgeschoben und dadurch eine Verarmung an Sauerstoff vermieden, welcher Effekt auch für das Einblasen eines Gases zwischen die Scheiben gilt.

## Patentansprüche

1. Begasungsvorrichtung für Flüssigkeiten, die Scheibentauchkörper mit vollflächigen Scheiben ohne Löcher aufweist, wobei zwischen jeweils zwei benachbarten Scheiben (7) mindestens eine, vorzugsweise vom Rand zur Mitte hin verlaufende, Dichtleiste (6) angeordnet ist, wodurch das durchgehende Volumen zwischen jeweils zwei Scheiben unterbrochen wird.

2. Verfahren zur Begasung von Flüssigkeiten mit einer Vorrichtung nach Anspruch 1 oder einer Vorrichtung, umfassend Scheibentauchkörper mit vollflächigen Scheiben ohne Löcher und ohne Dichtleiste zwischen jeweils zwei benachbarten Scheiben, indem ein Gaswechsel zwischen jeweils zwei benachbarten Scheiben durch Einblasen eines Gasstromes von außen zwischen die Scheiben der Vorrichtung erfolgt.

3. Verwendung der Vorrichtung nach Anspruch 1 zum Waschen von Gasen.

## Claims

1. Device for introducing gas into liquids, which comprises disc immersion bodies having full-surface discs without holes, wherein between each two neighbouring discs (7) at least one sealing strip (6) is arranged which preferably extends from the edge to the centre, whereby the continuous volume between each two discs is interrupted.

2. Method of introducing gas into liquids with a device according to Claim 1, or with a device comprising disc immersion bodies having full-surface discs without holes and without a sealing strip between each two neighbouring discs, a gas change being made between each two neighbouring discs by blowing a gas current from outside between the discs of the device.

3. The use of the device according to Claim 1 for the washing of gases.

## Revendications

1. Dispositif d'injection de gaz pour liquides, présentant un corps immergé discoïde à disques à surface pleine et sans trou, au moins une bande d'étanchéité (6), s'étendant de préférence du bord au centre, étant disposée entre chaque couple de deux disques (7) voisins, faisant que le volume traversant entre chaque couple de disques est interrompu.

2. Procédé d'injection de gaz dans des liquides avec un dispositif selon la revendication 1, ou un dispositif comprenant un corps immergé discoïde à disques pleins sans trou et sans bande d'étanchéité entre chaque couple de deux disques voisins, un échange de gaz étant effectué entre chaque couple de deux disque voisins, par insufflation d'un courant de gaz depuis l'extérieur, entre les disques du dispositif.

3. Utilisation du dispositif selon la revendication 1, pour effectuer le lavage de gaz.
